(19) Europäisches Patentamt
European Patent Office
Office européen des brevets

(11) **EP 2 404 957 B1**

(12) **EUROPEAN PATENT SPECIFICATION**

(45) Date of publication and mention
of the grant of the patent:
**28.12.2016 Bulletin 2016/52**

(51) Int Cl.:
***B32B 7/12*** *(2006.01)*　　　　***B32B 27/06*** *(2006.01)*
***C08L 23/04*** *(2006.01)*　　　　***C08L 23/02*** *(2006.01)*
***C08L 23/10*** *(2006.01)*　　　　***H01B 1/24*** *(2006.01)*
***C08J 9/00*** *(2006.01)*　　　　***C08J 9/12*** *(2006.01)*
***C08K 3/04*** *(2006.01)*　　　　***C09J 7/02*** *(2006.01)*
***B32B 5/18*** *(2006.01)*

(21) Application number: **10748679.7**

(22) Date of filing: **26.02.2010**

(86) International application number:
**PCT/JP2010/053075**

(87) International publication number:
**WO 2010/101084 (10.09.2010 Gazette 2010/36)**

(54) **FOAMED RESIN HAVING ELECTRICAL CONDUCTIVITY**

GESCHÄUMTES HARZ MIT ELEKTRISCHER LEITFÄHIGKEIT

RÉSINE MOUSSÉE AYANT UNE CONDUCTIVITÉ ÉLECTRIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.03.2009 JP 2009050196**
**25.02.2010 JP 2010041021**

(43) Date of publication of application:
**11.01.2012 Bulletin 2012/02**

(73) Proprietor: **Nitto Denko Corporation
Ibaraki-shi
Osaka 567-8680 (JP)**

(72) Inventors:
• **KOBAYASHI Tetsurou
Ibaraki-shi
Osaka 567-8680 (JP)**
• **SAITOU Makoto
Ibaraki-shi
Osaka 567-8680 (JP)**
• **FUJII Hiroki
Ibaraki-shi
Osaka 567-8680 (JP)**
• **HATANAKA Itsuhiro
Ibaraki-shi
Osaka 567-8680 (JP)**
• **KATO Kazumichi
Ibaraki-shi
Osaka 567-8680 (JP)**
• **NAKANO Shinya
Ibaraki-shi
Osaka 567-8680 (JP)**

(74) Representative: **Grünecker Patent- und
Rechtsanwälte
PartG mbB
Leopoldstraße 4
80802 München (DE)**

(56) References cited:
**WO-A1-2008/041617　　JP-A- 2003 041 038
JP-A- 2003 176 412　　JP-A- 2004 175 819
JP-A- 2005 097 566　　US-A1- 2002 010 223
US-A1- 2003 213 939　　US-A1- 2008 213 565**

**Description**

Technical Field

The present invention relates to an electrically conductive resin foam which is flexible and has a high expansion ratio (has been highly expanded). More specifically, the present invention relates to an electrically conductive resin foam which can work both as an electrically conductive member and as a cushioning sealant.

Background Art

Cellular phones and other electronic appliances have employed electrically conductive members for grounding or electromagnetic shielding so as to prevent malfunction of the appliances. Independently, such cellular phones and other electronic appliances have also employed cushioning sealants for cushioning between electronic components with each other and for dustproofing.

However, with reducing sizes thereof, recent cellular phones and other electronic appliances have tend to employ members in a smaller number and to bear electronic components at a higher density. To meet this requirement, there is a demand for providing a member working both as an electrically conductive member and as a cushioning sealant, instead of providing an electrically conductive member and a cushioning sealant separately as different members. There is also a demand for providing a flexible electrically conductive member and a flexible cushioning sealant to fill in a minute clearance between densely packaged electronic components. A cushioning sealant itself, even when used in applications where electrical conductivity is not required, should have an antistatic function or static protecting function, because the cushioning sealant is to be inevitably in contact with an electronic component.

As such electrically conductive members and cushioning sealants, there have been proposed an article composed of a foam and, arranged thereon, an electrically conductive material (see Patent Literature (PTL) 1, PTL 2, and PTL 3); an article composed of a foam and, arranged therearound, an electrically conductive cloth (see PTL 4); and an article composed of a foam containing an electrically conductive material therein (see PTL 5 and PTL 6).

However, the article composed of a foam and, arranged thereon, an electrically conductive material suffers from deteriorated flexibility of the foam due to the presence of the electrically conductive material and is difficult to have a sufficient electrical conductivity in a thickness direction (volume resistivity in the thickness direction).

The article composed of a foam and, arranged therearound, an electrically conductive cloth also suffers from deteriorated flexibility of the foam due to the presence of the electrically conductive cloth and is difficult to be processed into a desired shape through punching. In addition, this article is often incapable of being processed into a shape according to the shape of a portion, to which the article is to be inserted, and is difficult to work sufficiently as an electrically conductive member or cushioning sealant.

The proposed article composed of a foam containing an electrically conductive material therein (PTL 5 and PTL 6) has a low expansion ratio, thereby shows poor flexibility, and has a large cell diameter. For these reasons, this article is difficult to be processed into a thin article and to fill in a minute clearance between densely packaged electronic components. If the article fails to fill in such a minute clearance between densely packaged electronic components, this may cause increase in electrical resistance typically at a static eliminating (grounding) portion. Further polymer foams comprising electrically conductive particles are disclosed in PTL 7 to PTL 10.

Citation List

Patent Literature

PTL 1: PCT International Publication Number WO 2002/036667
PTL 2: Japanese Unexamined Patent Application Publication (JP-A) No. S62-241929
PTL 3: Japanese Examined Patent Application Publication (JP-B) No. H04-26615
PTL 4: Japanese Unexamined Patent Application Publication (JP-A) No. H11-346082
PTL 5: Japanese Unexamined Patent Application Publication (JP-A) No. 2006-63249
PTL 6: Japanese Unexamined Patent Application Publication (JP-A) No. 2004-83804
PTL 7: U.S. Patent Application Publication No. US 2003/213939 A1
PTL 8: U.S. Patent Application Publication No. US 2002/010223 A1
PTL 9: U.S. Patent Application Publication No. US 2008/213565 A1
PTL 10: Japanese Unexamined Patent Application Publication (JP-A) No. 2004-175819

Summary of Invention

Technical Problem

Accordingly, an object of the present invention is to provide a resin foam which is satisfactorily flexible and electrically conductive, which is capable of filling in a minute clearance between densely packaged electronic components, which is satisfactorily conformable to bumps while showing a low volume resistivity even when being compressed, and which is usable as an electrically conductive cushioning sealant.

Another object of the present invention is to provide a resin foam which not only has the above-mentioned properties but also can be satisfactorily processed into a desired shape. Still another object of the present invention is to provide a resin foam which not only has the above-mentioned properties but also is satisfactorily dustproofing and is usable as an electrically conductive dustproofing member. Solution to Problem

After intensive investigations to achieve the objects, the present inventors have found that, when a resin foam is designed to have a volume resistivity at a specific level or less and to have a repulsive load at 50% compression at a specific level or less, the resulting resin foam is satisfactorily flexible while being satisfactorily electrically conductive, is capable of filling in a minute clearance between densely packaged electronic components, is conformable to bumps in a bumpy portion while showing a low volume resistivity even when being compressed, and is advantageously usable as an electrically conductive cushioning sealant. The present invention has been made based on these findings.

Specifically, the present invention provides, in an aspect, a resin foam which has a volume resistivity of $10^{10}$ ohms centimeter ($\Omega\cdot$cm) or less, a repulsive load at 50% compression of 5 newtons per square centimeter (N/cm$^2$) or less, and a compression resistivity of $10^8$ ohms centimeter ($\Omega\cdot$cm) or less; wherein the resin foam has been formed from a resin composition comprising a resin, at least one electrically conductive substance, and a lubricant; and wherein the amount of the electrically conductive substance is from 3 to 20 parts by weight per 100 parts by weight of the resin, and the amount of lubricant us 0.5 to 10 parts by weight per 100 parts by weight of the resin.

In another embodiment of the present invention, the resin foam may have a surface resistivity of $10^{10}$ ohms per square ($\Omega/\square$) or less.

In still another embodiment of the present invention, the resin foam may have an expansion ratio of 9 times or more.

In yet another embodiment of the present invention, the resin foam may have an apparent density of from 0.01 to 0.15 g/cm$^3$.

The resin foam according to the present invention may have an average cell diameter of from 10 to 250 $\mu$m.

In the resin foam according to the present invention, the at least one electrically conductive substance may include a carbonaceous filler.

In the resin foam according to the present invention, the resin may be a thermoplastic resin.

In another embodiment of the present invention, the resin foam may include a thermoplastic resin and a carbonaceous filler, in which the carbonaceous filler has a Brunauer-Emmett-Teller (BET) specific surface area of 500 m$^2$/g or more and is present in an amount of from 3 to 20 parts by weight per 100 parts by weight of the thermoplastic resin, and the resin foam has an average cell diameter of from 10 to 250 $\mu$m and an apparent density of from 0.01 to 0.15 g/cm$^3$.

Still another embodiment of the present invention, the resin foam may have a closed cell structure or semiopen/semiclosed cell structure.

In an embodiment of the present invention, the resin form may have been formed through the steps of: impregnating the above resin composition with an inert gas under high pressure and decompressing the impregnated resin composition.

In another embodiment of the present invention, the resin foam may have been formed through the steps of: impregnating a resin composition with an inert gas under high pressure, the resin composition containing a thermoplastic resin and a carbonaceous filler, the carbonaceous filler having a BET specific surface area of 500 m$^2$/g or more and being present in an amount of 3 to 20 parts by weight per 100 parts by weight of the thermoplastic resin; and decompressing the impregnated resin composition.

The inert gas may be carbon dioxide.

The inert gas may be in a supercritical state.

The present invention provides, in another aspect, an electrically conductive foam member, including the resin foam; and a pressure-sensitive adhesive layer present on or above one or both sides of the resin foam.

The electrically conductive foam member may further include the pressure-sensitive adhesive layer which included a film layer presents on the foam.

The pressure-sensitive adhesive layer in the electrically conductive foam member may include an acrylic pressure-sensitive adhesive.

EP 2 404 957 B1

Advantageous Effects of Invention

The resin foam according to the present invention has the above configuration, is thereby satisfactorily flexible and satisfactory electrical conductive, is capable of filling in a minute clearance between densely packaged electronic components, is conformable to bumps in a bumpy portion while showing a low volume resistivity even when being compressed, and is usable as an electrically conductive cushioning sealant.

Brief Description of Drawings

[Fig. 1] Fig. 1 is a schematic cross-sectional view illustrating how to evaluate clearance conformability.
[Fig. 2] Fig. 2 is a schematic diagram illustrating an exemplary dustproofness testing instrument.
[Fig. 3] Fig. 3 is a schematic cross-sectional view illustrating the exemplary dustproofness testing instrument.
[Fig. 4] Fig. 4 is a schematic cross-sectional view illustrating an upper electrode bearing a poly(ethylene terephthalate) (PET) film.

Description of Embodiments

The resin foam according to the present invention has a volume resistivity of $10^{10}$ Ω·cm or less, a compression resistivity of $10^6$ ohms centimeter (Ω·cm) or less, and a repulsive load at 50% compression of 5 N/cm² or less. The resin foam is formed from a resin composition containing a resin, a lubricant and an electrically conductive substance.

(resin foam)

The resin foam according to the present invention has such a configuration as to have a volume resistivity of $10^{10}$ Ω·cm or less and a load against repulsion when compressed to 50% of the initial thickness (repulsive load at 50% compression, 50-percent compression load) of 5 N/cm² or less. Thus, the resin foam is highly electrically conductive and satisfactorily flexible and is adoptable typically to electrically conductive members, shock absorbers, cushioning sealants, electrically conductive cushioning sealants, dustproofing members, and electrically conductive dustproofing members. The resin foam is preferably in the form of a sheet or film.
The resin foam has a volume resistivity of $10^8$ Ω·cm or less, and preferably $10^5$ Ω·cm or less. The volume resistivity of the resin foam is measured according to the double ring electrode method prescribed in Japanese Industrial Standards (JIS) K 6271.
The resin foam is adoptable to wide uses as mentioned above. The resin foam, when having a volume resistivity of $10^8$ Ω·cm or less, is adoptable typically to an antistatic cushioning sealant which is usable, for example, even in a clean room; and the resin foam, when having a volume resistivity of $10^5$ Ω·cm or less, is adoptable typically to an electrically conductive cushioning sealant which grounds an electronic component to be in contact therewith and prevents the malfunction of the electronic component due to electrostatic hazard.
The resin foam has a repulsive load at 50% compression of 5 N/cm² or less, preferably 4 N/cm² or less, and more preferably 3 N/cm² or less, for ensuring conformability to a minute clearance. The repulsive load at 50% compression of the resin foam is measured according to the method for measuring a compression hardness prescribed in JIS K 6767.
Typically, the resin foam, when having a repulsive load at 50% compression of 4 N/cm² or less, may show very good conformability to surface asperities and is thereby advantageously usable for grounding of an electronic component having large surface asperities (e.g., surface asperities with difference in level of from 0.05 to 0.20 mm).
The resin foam according to the present invention has a compression resistivity of $10^8$ Ω·cm or less, and preferably $10^6$ Ω·cm or less for satisfactorily conforming bumps in a bumpy portion and exhibiting satisfactory electrical conductivity even when being compressed. The compression resistivity is defined as below.
As used herein the term "compression resistivity" refers to a volume resistivity as measured by sandwiching the following resin foam between a bumped upper electrode and a lower electrode both as mentioned below so that the bumped surface of the upper electrode be in contact with the resin foam, and compressing the resin foam from above by 5% (at a compression ratio of 5%) in the thickness direction.

Resin foam: Sheet-like resin foam 25 mm long, 25 mm wide, and 1 mm thick
Bumped upper electrode: Electrode being obtained by applying two plies of a PET tape 25 mm long, 7.5 mm wide, and 0.1 mm thick to both ends of an electrode 25 mm long and 25 mm wide; and the resulting electrode having a depression 25 mm long, 10 mm wide, and 0.1 mm deep on a side to be in contact with the resin foam
Lower electrode: Electrode with a smooth surface, 25 mm long and 25 mm wide.

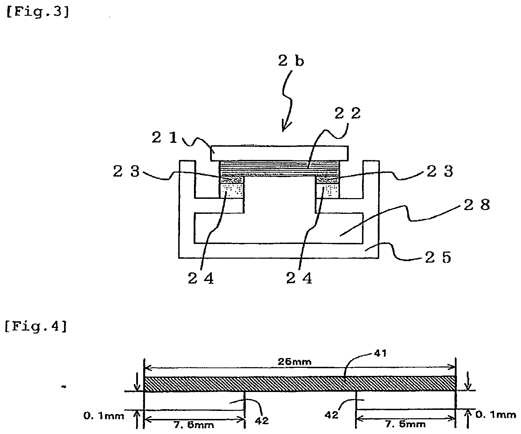

Fig. 4 depicts a schematic cross-sectional view of an exemplary bumped upper electrode.

In a preferred embodiment of the present invention, the resin foam has a surface resistivity of $10^{10}$ ohms per square or less, preferably $10^8$ ohms per square or less, and more preferably $10^5$ ohms per square or less, in addition to having a volume resistivity of $10^{10}$ $\Omega$·cm or less. This allows the resin foam to be more advantageously adoptable to a wide variety of uses such as electrically conductive members, shock absorbers, cushioning sealants, electrically conductive cushioning sealants, dustproofing member, and electrically conductive dustproofing members.

Typically, the resin foam, when having a surface resistivity of $10^8$ ohms per square or less, is adoptable typically to an antistatic cushioning sealant which is usable even in a clean room. The resin foam, when having a surface resistivity of $10^5$ ohms per square or less, is more advantageously adoptable typically to an electrically conductive cushioning sealant which grounds an electronic component to be in contact therewith and prevents malfunction of the electronic component due to electrostatic hazard.

The resin foam according to the present invention may have an apparent density of 0.15 g/cm$^3$ or less, more preferably 0.10 g/cm$^3$ or less, and furthermore preferably 0.07 g/cm$^3$ or less, for further higher flexibility. In contrast, for satisfactory electrical conductivity, the resin foam has an apparent density of preferably 0.01 g/cm$^3$ or more, and more preferably 0.02 g/cm$^3$ or more.

The resin foam may have an expansion ratio of preferably 9 times or more (e.g., from 9 times to 50 times), and more preferably 15 times or more (e.g., from 15 times to 30 times), for satisfactory flexibility and satisfactory shock absorptivity. The resin foam, if having an expansion ratio of less than 9 times, may not have sufficient flexibility and shock absorptivity. In contrast, the resin foam, if having an expansion ratio of more than 50 times, may show a significantly low strength.

The expansion ratio of the resin foam may be determined by calculation according to the following expression:

$$\texttt{Expansion ratio (time) = (Density before expansion)/(Density after expansion)}$$

The density before expansion (foaming) corresponds to the density of an unexpanded molded article, or the density of a resin composition before expansion in the case when the resin composition is molten, and the molten resin is impregnated with an inert gas to form the resin foam. The density after expansion corresponds to the apparent density of the resin foam.

The resin foam has an average cell diameter (average foam diameter) of preferably 250 $\mu$m, more preferably 200 $\mu$m or less, furthermore preferably 100 $\mu$m or less, and still more preferably 80 $\mu$m or less. This allows the resin foam to be capable of processed into a thin article, to thereby be conformable to a minute clearance, and to show higher dustproofness. In contrast, the resin foam has an average cell diameter of preferably 10 $\mu$m or more, more preferably 15 $\mu$m or more, and furthermore preferably 20 $\mu$m or more, for further satisfactory shock absorptivity (cushioning property).

Particularly for further higher dustproofness, the resin foam has an average cell diameter of preferably 250 $\mu$m or less, more preferably 200 $\mu$m or less, and furthermore preferably 100 $\mu$m or less.

The resin foam has a thickness of preferably 2.0 mm or less, more preferably 1.0 mm or less, and furthermore preferably 0.5 mm or less. This may allow the resin foam to be processed into a thin article easily and to conform further satisfactorily to a minute clearance. The resin foam has a thickness of generally 0.2 mm or more, and preferably 0.3 mm or more.

The resin foam preferably has a cell structure of a closed cell structure or semiopen/semiclosed cell structure, for the formation of a conduction path (electroconductive network) and for satisfactory dustproofness. The semiopen/semiclosed cell structure is a cell structure in which a closed cell structure and an open cell structure are present in coexistence, whereas the ratio between the two structures is not limited. In particular, the resin foam preferably has such a cell structure that a closed cell structure region occupies 50% or more, more preferably 80% or more, and particularly preferably 90% or more of the resin foam.

The volume resistivity and the surface resistivity of the resin foam may be controlled by selecting the type of the resin and/or regulating the type and amount of the electrically conductive substance.

The repulsive load at 50% compression, apparent density, expansion ratio, average cell diameter, and cell structure of the resin foam may be controlled by suitably choosing or setting expansion molding conditions including operation conditions in the gas impregnation step, such as temperature, pressure, time, and amount of a gas to be mixed; operation conditions in the decompression step, such as decompression rate, temperature, and pressure; and temperature of heating after decompression. These conditions may be chosen or set according to the type of the resin, the type of the blowing agent, and the types of electrically conductive substance and other additives.

Typically, the resin composition may be a resin composition including a thermoplastic resin and a carbonaceous filler, in which the carbonaceous filler has a BET specific surface area of 500 m$^2$/g and is present in an amount of 3 to 20 parts by weight per 100 parts by weight of the thermoplastic resin. The use of this resin composition gives a resin foam including a thermoplastic resin and a carbonaceous filler, in which the carbonaceous filler has a BET specific surface area of 500 $m^2$/g and is present in an amount of from 3 to 20 parts by weight per 100 parts by weight of the thermoplastic resin, and the resin foam has a volume resistivity of $10^{10}$ $\Omega$·cm or less and a repulsive load at 50% compression of 5 N/cm$^2$ or less. The use of the resin composition further gives a resin foam including a thermoplastic resin, and a carbonaceous filler present in an amount of from 3 to 20 parts by weight per 100 parts by weight of the thermoplastic resin, in which the resin foam has a volume resistivity of $10^{10}$ $\Omega$·cm or less, has a repulsive load at 50% compression of 5 N/cm$^2$ or less, and has one or more controlled properties such as surface resistivity, expansion ratio, apparent density, compression resistivity, and average cell diameter. For example, the resin composition may give a resin foam including a thermoplastic resin and a carbonaceous filler, the carbonaceous filler having a BET specific surface area of 500 $m^2$/g and being present in an amount of from 3 to 20 parts by weight per 100 parts by weight of the thermoplastic resin, in which the resin foam has a volume resistivity of $10^{10}$ $\Omega$·cm or less, a repulsive load at 50% compression of 5 N/cm$^2$ or less, an average cell diameter of from 10 to 250 $\mu$m, and an apparent density of from 0.01 to 0.15 g/cm$^3$.

The resin foam according to the present invention is satisfactory flexible and satisfactory electrically conductive, has been highly expanded, and is lightweight. In addition, the resin foam is conformable to a minute clearance. In particular, the resin foam, even when being compressed, is satisfactorily flexible and electrically conductive. Even when compressed by 5% in the thickness direction, the resin foam is satisfactorily conformable to bumps and exhibits a low volume resistivity.

The resin foam, when having a fine cell structure, can be satisfactorily processed into a desired shape. In addition, the resin foam, when being controlled in average cell diameter, is improved particularly in dustproofness.

The resin foam has the above-mentioned properties and is thereby advantageously usable typically as electrically conductive members, shock absorbers, cushioning sealants, electrically conductive cushioning sealants, dustproofing members, and electrically conductive dustproofing members.

The resin foam has the above-mentioned properties, is capable of filling in a minute clearance between densely packaged components, and is thereby usable typically in members or components, electronic components, and electronic appliances particularly advantageously when they are compact and/or slim. Typically, the resin foam is advantageously usable in liquid crystal display devices such as liquid crystal displays, electroluminescent displays, and plasma displays; and apparatuses for mobile communications, such as cellular phones and mobile data terminals (personal digital assistants).

(Resin Composition)

The resin composition is a composition containing at least a resin and an electrically conductive substance and forming a resin foam.

The resin for use as a material for the resin foam (hereinafter also briefly referred to as "foam") herein is not limited, as long as being a polymer having thermoplasticity (being a thermoplastic polymer) and capable of being impregnated with a high-pressure gas. Examples of such thermoplastic polymers include olefinic polymers such as low-density polyethylenes, medium-density polyethylenes, high-density polyethylenes, linear low-density polyethylenes, polypropylenes, copolymers between ethylene and propylene, copolymers between ethylene or propylene and another $\alpha$-olefin, and copolymers between ethylene and another ethylenically unsaturated monomer (e.g., vinyl acetate, acrylic acid, an acrylic acid ester, methacrylic acid, a methacrylic acid ester, or vinyl alcohol); styrenic polymers such as polystyrenes and acrylonitrile-butadiene-styrene copolymers (ABS resins); polyamides such as 6-nylon, 66-nylon, and 12-nylon; polyamideimides; polyurethanes; polyimides; polyetherimides; acrylic resins such as poly(methyl methacrylate)s; poly(vinyl chloride)s; poly(vinyl fluoride)s; alkenyl aromatic resins; polyesters such as poly(ethylene terephthalate)s and poly(butylene terephthalate)s; polycarbonates such as bisphenol-A polycarbonates; polyacetals; and poly(phenylene sulfide)s.

Examples of the thermoplastic polymer further include thermoplastic elastomers which show properties as rubber at normal temperature (room temperature) and show plasticity at high temperatures. Exemplary thermoplastic elastomers include olefinic elastomers such as ethylene-propylene copolymers, ethylene-propylene-diene copolymers, ethylene-vinyl acetate copolymers, polybutenes, polyisobutylenes, and chlorinated polyethylenes; styrenic elastomers such as styrene-butadiene-styrene copolymers, styrene-isoprene-styrene copolymers, and styrene-isoprene-butadiene-styrene copolymers, as well as polymers as hydrogenated products of them; thermoplastic polyester elastomers; thermoplastic polyurethane elastomers; and thermoplastic acrylic elastomers. Each of such thermoplastic elastomers has, for example, a glass transition temperature of equal to or lower than room temperature (e.g., 20°C or lower) and thereby gives a resin foam having significantly excellent flexibility and dimensional conformability.

Each of different thermoplastic polymers may be used alone or in combination. The material for the foam may be a thermoplastic elastomer; another thermoplastic polymer than thermoplastic elastomer; or a mixture of a thermoplastic elastomer and another thermoplastic polymer than thermoplastic elastomer.

Examples of the mixture of a thermoplastic elastomer and another thermoplastic polymer than thermoplastic elastomer include a mixture of an olefinic elastomer (e.g., an ethylene-propylene copolymer) and an olefinic polymer (e.g., a polypropylene). The ratio of a thermoplastic elastomer to another thermoplastic polymer than thermoplastic elastomer, when used in combination as a mixture, is typical from about 1:99 to about 99:1, preferably from about 10:90 to about 90:10, and more preferably from about 20:80 to about 80:20.

The electrically conductive substance is contained as an essential additive in the resin composition. The resin foam according to the present invention is formed from such a resin composition containing the electrically conductive substance. This contributes typically to the formation of a conduction path and the control of the electrical conductivity. Each of different electrically conductive substances may be used alone or in combination.

The electrically conductive substance is not limited, as long as forming a conduction path in the resin foam and hallowing the resin foam to have a volume resistivity of $10^{10}$ $\Omega$·cm or less. In a preferred embodiment of the present invention, the resin composition contains a carbonaceous filler as an essential electrically conductive substance, because the use of such a carbonaceous filler enables easy formation of a conduction path and easy control of electrical conductivity and allows the resin foam to have stable properties.

The resin composition for use in the present invention may contain, as an optional electrically conductive substance, one or more fillers other than carbonaceous fillers, such as metallic fillers and other fillers as mentioned below.

Exemplary metallic fillers include fillers of pure metals such as copper, silver, gold, iron, platinum, nickel, and aluminum; fillers of alloys such as stainless steel and brass; and fillers of metal oxides such as aluminum oxide, titanium oxide, zinc oxide, silver oxide, magnesium oxide, calcium oxide, barium oxide, strontium oxide, silicon oxide, and zirconium oxide. Exemplary other fillers include carbonates such as calcium carbonate and magnesium carbonate; sulfates such as barium sulfate; hydroxides such as aluminum hydroxide and magnesium hydroxide; silicic acid and salts thereof; clay; talc; mica; bentonite; silica; aluminum silicate; and basalt fibers.

The resin composition for use in the present invention may contain both a carbonaceous filler as an essential electrically conductive substance and another filler than carbonaceous filler as an optional electrically conductive substance. In this case, it is important that the carbonaceous filler occupies 80 percent by weight or more, preferably 90 percent by weight or more, of the total weight of the electrically conductive substances.

Exemplary carbonaceous fillers include carbon fibers, carbon blacks, graphite, carbon nanotubes, fullerenes, and activated carbons.

Of carbonaceous fillers, so-called electrically conductive carbon blacks are preferred, because they enable easy formation of a conduction path and easy control of electrical conductivity and allow the resin foam to exhibit properties stably.

Exemplary electrically conductive carbon blacks include acetylene black, Ketjenblack, furnace black, channel black, thermal black, and carbon nanotubes. Of such electrically conductive carbon blacks, Ketjenblack is preferred.

The electrically conductive substance has such a structure as to have a BET specific surface area of preferably 500 m$^2$/g or more, and more preferably 1000 m$^2$/g or more. The electrically conductive substance, when having the structure, can provide a desired electrical conductivity even present in a small amount, and the electrically conductive substance, when used in such a small amount, does not adversely affect the performance of the resin composition (e.g., does not adversely affect the flowability of the resin composition). In addition, the molecules of the electrically conductive substance, when having such a large surface area, are easily in contact with each other and thereby easily form a conduction path.

The electrically conductive substance is not limited in its shape and may have, for example, a powdery amorphous, spherical, rod-like, staple, plate-like, or cylindrical (tubular) shape. The electrically conductive substance, when typically having a cylindrical (tubular) shape, may often have a large specific surface area.

The electrically conductive substance may have a hollow structure. The electrically conductive substance, when having such a hollow structure, may often have a large BET specific surface area.

In the present invention, an electrically conductive substance having a hollow structure is more preferred than one having a solid structure. This is because not the weight, but the surface area of the electrically conductive substance significantly affects the formation of a conduction path in the resin foam, and the electrically conductive substance having a hollow structure can have a larger surface area per weight than that of one having a solid structure. In addition, the electrically conductive substance having a hollow structure can be used in a smaller weight per volume, and this protects the resin composition from deterioration in performance.

The electrically conductive substance is not limited in its surface shape and may have a smooth surface or a rough surface with asperities. The electrically conductive substance, when having a rough surface or porous surface, may often have a large specific surface area.

The amount of the electrically conductive substance is from 3 to 20 parts by weight, and preferably from 5 to 10 parts by weight, per 100 parts by weight of the resin. The electrically conductive substance, if present in an amount of less than 5 parts by weight, may not impart sufficient electrical conductivity to the resin foam. In contrast, the electrically conductive substance, if present in an amount of more than 20 parts by weight, may adversely affect the flowability of the resin composition and may thereby fail to give a highly expanded foam.

The resin composition for use in the present invention may further contain one or more additives according to necessity, in addition to the electrically conductive substance and the lubricant. The additives are not limited in their types and may be a variety of additives generally used in expansion molding. Examples of such additives include foaming nucleators, crystal nucleators, plasticizers, colorants (e.g., pigments and dyestuffs), ultraviolet absorbers, antioxidants, age inhibitors, fillers other than the electrically conductive substances, reinforcers, flame retardants, antistatic agents, surfactants, vulcanizers, and surface preparation agents. The amounts of additives may be chosen within ranges not impeding, for example, the formation of bubbles (cells) and may be such amounts as commonly used in expansion/molding of resins. Each of different additives may be used alone or in combination.

The lubricants help the resin to have higher flowability and to less suffer from thermal degradation. Such lubricants for use herein are not limited, as long as being capable of helping the resin to have higher flowability, and examples thereof include hydrocarbon lubricants such as liquid paraffins, paraffin waxes, microcrystalline waxes, and polyethylene waxes; fatty acid lubricants such as stearic acid, behenic acid, and 12-hydroxystearic acid; and ester lubricants such as butyl stearate, stearic acid monoglyceride, pentaerythritol tetrastearate, hydrogenated caster oil, and stearyl stearate. Each of different lubricants may be used alone or in combination.

The amount of lubricants is from 0.5 to 10 parts by weight, preferably from 0.8 to 8 parts by weight, and more preferably from 1 to 6 parts by weight, per 100 parts by weight of the resin. Lubricants, if used in an amount of more than 10 parts by weight, may cause the resin thereby cause the resin foam to have an insufficient expansion ratio. Lubricants, if used in an amount of less than 0.5 part by weight, may not sufficiently effectively help the resin to have satisfactory flowability and may cause the resin to stretch insufficiently upon expansion, and this may cause the resin foam to have an insufficient expansion ratio.

The shrinkage inhibitors help to form molecular films (monolayers) on surfaces of cell membranes (cell walls) of the foam to effectively block the permeation of the blowing agent gas. Such shrinkage inhibitors for use herein are not limited, as long as having the function of blocking the permeation of the blowing agent gas. The shrinkage inhibitors can be any of metal salts of fatty acids and fatty amides. Exemplary metal salts of fatty acids include aluminum, calcium, magnesium, lithium, barium, zinc, and lead salts of fatty acids such as stearic acid, behenic acid, and 12-hydroxystearic acid. Exemplary fatty amides include fatty amides whose fatty acid moiety having about 12 to about 38 carbon atoms (preferably having about 12 to about 22 carbon atoms), such as stearamide, oleamide, erucamide, methylene bis(stearamide), ethylene bis(stearamide), and lauric bisamide. Such fatty amides may be either monoamides and bisamides, but bisamides are preferred for giving a fine cell structure. Each of different shrinkage inhibitors may be used alone or in combination.

The amount of shrinkage inhibitors is typically from 0.5 to 10 parts by weight, preferably from 0.7 to 8 parts by weight, and more preferably from 1 to 6 parts by weight, per 100 parts by weight of the resin. Shrinkage inhibitors, if used in an amount of more than 10 parts by weight, may lower the gas efficiency during the cell growth process, and the resulting foam may include a large quantity of unexpanded portions and may expand at an insufficient expansion ratio, although it includes cells with small diameters. Shrinkage inhibitors, if added in an amount of less than 0.5 part by weight, may not sufficiently help to form films over cell walls, and this may cause gas escape during foaming and cause shrinkage of the resulting foam, thus resulting in an insufficient expansion ratio of the foam.

Different types of additives, e.g., a lubricant and a shrinkage inhibitor, may be used in combination. Typically, one or more lubricants such as stearic acid monoglyceride may be used in combination with one or more shrinkage inhibitors such as erucamide and lauric bisamide.

The resin composition may be obtained according to a known or customary technique. Typically, the resin composition may be obtained by adding an electrically conductive substance and, where necessary, additives to a material resin for the foam, and kneading them. The kneading may be performed with heating.

The resin composition is used for the formation of a resin foam having a volume resistivity of $10^{10}$ $\Omega \cdot$cm or less and a repulsive load at 50% compression of 5 N/cm$^2$ or less. In an exemplary embodiment of the resin composition, the resin composition contains a thermoplastic resin and a carbonaceous filler, in which the carbonaceous filler has a BET specific surface area of 500 m$^2$/g and is present in an amount of from 3 to 20 parts by weight per 100 parts by weight of the thermoplastic resin.

(Production of Resin Foam)

The resin foam according to the present invention is formed from a resin composition containing at least a resin and an electrically conductive substance. Ways to form the resin foam are not limited and include customary techniques such as physical techniques and chemical techniques. An exemplary customary physical technique is a technique in which a low-boiling liquid (blowing agent), such as a chlorofluorocarbon or a hydrocarbon, is dispersed in a resin, and the resin bearing the blowing agent is heated to volatilize the blowing agent to thereby form bubbles (cells). An exemplary customary chemical technique is a technique of adding a compound (blowing agent) to a resin, and thermally decomposing the blowing agent to form a gas to thereby form bubbles (cells). However, if foaming is performed according to the customary physical technique as above, there may occur problems about the combustibility, toxicity, and influence on the environment (such as ozone layer depletion) caused by the material used as the blowing agent. Independently, if foaming is performed according to the customary chemical technique, the residue of the blowing agent gas remains in the foam; this causes problems such as, in the case of the blowing agent being corrosive, corrosion by the corrosive gas, and contamination by impurities in the gas, and these troubles are significant especially in electronic appliances where contamination should be essentially avoided. In addition, the customary physical and chemical foaming techniques are believed to be difficult to give a fine cell structure and to be very difficult to give fine bubbles (micro cells) of 300 $\mu$m or less.

To avoid the above problems and to give a foam having a small cell diameter and a high cell density easily, the foaming is preferably performed according to a technique using a high-pressure inert gas as the blowing agent.

Specific examples of ways to produce the resin foam according to the present invention from a resin composition by using a high-pressure inert gas as the blowing agent include a process including the steps of impregnating the resin with an inert gas under high pressure (gas impregnation step); decompressing the impregnated resin after the gas impregnation step to expand the resin (decompression step); and, where necessary, heating the expanded resin for cell growth (heating step). In this process, it is accepted that the resin composition is previously molded to give an unexpanded molded article, and the unexpanded molded article is impregnated with an inert gas; or that the resin composition is melted, and the molten resin is impregnated with an inert gas under pressure (under a load), and the impregnated resin is molded upon decompression. Each of these steps may be performed according to a batch system or continuous system.

The inert gas for use herein is not especially limited, as long as being inert to the resin and being impregnatable into the resin. Exemplary inert gases include carbon dioxide, nitrogen gas, and air. These gases may be used in combination as a mixtures. Of these, carbon dioxide is preferred, because it can be impregnated in a large amount and at a high rate into the resin to be used as a material for constituting the foam. Carbon dioxide is also preferred from the viewpoint of giving a resin foam which contains less impurities and is clean.

The inert gas upon impregnation into the resin is preferably in a supercritical state. The inert gas, when being in a supercritical state, shows increased solubility in the resin and can thereby be incorporated in the resin in a higher concentration. In addition, because of its high concentration, the supercritical inert gas generates a larger number of cell nuclei upon an abrupt pressure drop (decompression) after impregnation. These cell nuclei grow to give cells which are present in a higher density than in a foam having the same porosity and prepared with the same gas but in another state. Consequently, use of a supercritical inert gas can give fine micro cells. Carbon dioxide has a critical temperature and a critical pressure of 31°C and 7.4 MPa, respectively.

According to the batch system, a resin foam may be prepared, for example, in the following manner. Initially, an unexpanded molded article (e.g., a resin sheet for the formation of foam) is formed by extruding the resin composition through an extruder such as a single-screw extruder or twin-screw extruder. Alternatively, such an unexpanded molded article (e.g., a resin sheet for the formation of foam) is formed by uniformly kneading the resin composition in a kneading machine equipped with one or more blades typically of roller, cam, kneader, or Banbury type; and press-forming the kneadate with a hot-plate press. The resulting unexpanded molded article is placed in a pressure-tight vessel, a high-pressure inert gas is injected into the vessel, and the unexpanded molded article is impregnated with the inert gas. In this case, the unexpanded molded article is not especially limited in shape and can be in any form such as a roll form or sheet form. The injection of the high-pressure inert gas may be performed continuously or discontinuously. At the time when the unexpanded molded article is sufficiently impregnated with the high-pressure inert gas, the unexpanded molded article is released from the pressure (the pressure is usually lowered to atmospheric pressure) to thereby generate cell nuclei in the resin. The cell nuclei may be allowed to grow at room temperature without heating, or may be allowed to grow by heating according to necessity. The heating may be performed according to a known or common procedure such as heating with a water bath, oil bath, hot roll, hot-air oven, far-infrared rays, near-infrared rays, or microwaves. After the cells have grown in the above manner, the article is rapidly cooled typically with cold water to fix its shape.

According to the continuous system, a resin foam may be formed typically in the following manner. Specifically, the resin composition is kneaded in an extruder such as a single-screw extruder or twin-screw extruder, and during the kneading, a high-pressure inert gas is injected so as to impregnate the resin with the gas sufficiently. The resulting article is then extruded and thereby released from the pressure (the pressure is usually lowered to atmospheric pressure) to perform expansion and molding simultaneously to thereby allow cells to grow. In some cases, heating is performed to assist the growth of cells. After cells have grown, the extrudate is rapidly cooled typically with cold water to fix its shape.

The pressure in the gas impregnation step is typically 6 MPa or more (e.g., from about 6 to about 100 MPa), and preferably 8 MPa or more (e.g., from about 8 to about 100 MPa). If the pressure of the inert gas is lower than 6 MPa, considerable cell growth may occur during foaming, and this may cause the cells to have too large diameters to give a small average cell diameter within the above-specified range and may cause insufficient dustproofing effects. The reasons for this are as follows. When impregnation is performed under a low pressure, the amount of the impregnated gas is relatively small and the cell nuclei grow at a lower rate as compared to impregnation under a higher pressure. As a result, cell nuclei are formed in a smaller number. Because of this, the gas amount per cell increases rather than decreases, resulting in excessively large cell diameters. Furthermore, under pressures lower than 6 MPa, only a slight change in impregnation pressure results in considerable changes in cell diameter and cell density, and this may often impede the control of cell diameter and cell density.

The temperature in the gas impregnation step may vary depending typically on the types of the inert gas and resin to be used and can be chosen within a wide range. When impregnation operability and other conditions are taken into account, the impregnation temperature is typically from about 10°C to about 350°C. For example, when an unfoamed molded article in a sheet form is impregnated with an inert gas according to a batch system, the impregnation temperature is from about 10°C to about 250°C, preferably from about 10°C to about 200°C, and more preferably from about 40°C to about 200°C. When a molten resin composition is impregnated with a gas and is extruded to perform foaming (expansion) and molding simultaneously according to a continuous system, the impregnation temperature is generally from about 60°C to about 350°C. When carbon dioxide is used as the inert gas, the impregnation temperature is preferably 32°C or higher, and more preferably 40°C or higher in order to keep carbon oxide in a supercritical state.

Though not critical, the amount of the inert gas (gas as a blowing agent) to be impregnated is preferably from 1 to 15 percent by weight, more preferably from 2 to 12 percent by weight, and furthermore preferably 3 to 10 percent by weight, relative to the total amount of resin(s) in the thermoplastic resin composition, for satisfactory expansion and for a cell structure having a small average cell diameter typically within the above range.

The decompression in the decompression step is preferably performed at a decompression rate of from about 5 to about 300 MPa/second, for obtaining more uniform fine cells. The heating in the heating step may be performed at a temperature of typically from about 40°C to about 250°C, and preferably from about 60°C to about 250°C.

Exemplary processes for producing a resin foam having a volume resistivity of $10^{10}$ $\Omega \cdot$cm or less and a repulsive load at 50% compression of 5 N/cm$^2$ or less include a process (first embodiment) for producing a resin foam through the steps of impregnating a resin composition with a high-pressure inert gas, and decompressing the impregnated resin composition; and a process (second embodiment) for producing a resin foam through the steps of preparing an unexpanded molded article from a resin composition, impregnating the unexpanded molded article with a high-pressure inert gas, and decompressing the impregnated unexpanded molded article.

In a more specific embodiment, the resin foam is produced by a process including the steps of impregnating a resin composition with a high-pressure inert gas; and decompressing the impregnated resin composition, in which the resin composition contains a thermoplastic resin and a carbonaceous filler, and the carbonaceous filler has a BET specific surface area of 500 m$^2$/g and is present in an amount of from 3 to 20 parts by weight per 100 parts by weight of the thermoplastic resin. In another specific embodiment, the resin foam is produced by a process including the steps of preparing an unexpanded molded article from a resin composition; impregnating the unexpanded molded article with a high-pressure inert gas; and decompressing the impregnated unexpanded molded article, in which the resin composition contains a thermoplastic resin and a carbonaceous filler, and the carbonaceous filler has a BET specific surface area of 500 m$^2$/g and is present in an amount of from 3 to 20 parts by weight per 100 parts by weight of the thermoplastic resin.

(Electrically Conductive Foam Member)

The electrically conductive foam member includes at least the resin foam. Specifically, the electrically conductive foam member may structurally include the resin foam alone or structurally include the resin foam and, arranged on or above one or both sides thereof, one or more other layers or substrates (e.g., a pressure-sensitive adhesive layer).

The electrically conductive foam member, when structurally including the resin foam and, on or above one or both sides thereof, a pressure-sensitive adhesive layer, enables the fixation or temporary fixation of an optical member or another member or component to an adherend.

A pressure-sensitive adhesive for constituting the pressure-sensitive adhesive layer is not limited and may be suitably chosen from among known pressure-sensitive adhesives such as acrylic pressure-sensitive adhesives, rubber pressure-sensitive adhesives (e.g., natural rubber pressure-sensitive adhesives and synthetic rubber pressure-sensitive adhesives), silicone pressure-sensitive adhesives, polyester pressure-sensitive adhesives, urethane pressure-sensitive adhesives, polyamide pressure-sensitive adhesives, epoxy pressure-sensitive adhesives, vinyl alkyl ether pressure-sensitive adhesives, and fluorine-containing pressure-sensitive adhesives. Each of different pressure-sensitive adhesives may be used alone or in combination. The pressure-sensitive adhesives may be pressure-sensitive adhesives of any type, such as emulsion pressure-sensitive adhesives, hot-melt pressure-sensitive adhesives, solvent-borne pressure-sensitive adhesives, oligomer pressure-sensitive adhesives, and solid pressure-sensitive adhesives. Of such pressure-sensitive adhesives, acrylic pressure-sensitive adhesives are preferred from the viewpoint typically of preventing contamination to the adherend.

The pressure-sensitive adhesive layer may be formed according to a known or customary process. Exemplary formation processes include a coating process in which a pressure-sensitive adhesive is applied to a predetermined site or surface to form a pressure-sensitive adhesive layer thereon; and a transfer process in which a pressure-sensitive adhesive is applied to a release liner or another release film to form a pressure-sensitive adhesive layer thereon, and the pressure-sensitive adhesive layer is transferred to a predetermined site or surface. The formation of the pressure-sensitive adhesive layer may be performed by suitably using a known or common coating procedure such as flow casting, coating with a roll coater, coating with a reverse coater, or coating with a doctor blade.

The pressure-sensitive adhesive layer has a thickness of generally from about 2 to about 100 μm, and preferably from about 10 to about 100 μm. The thickness of the pressure-sensitive adhesive layer is preferably minimized, because such a thin pressure-sensitive adhesive layer can be more effectively prevented from the attachment of dirt or dust at the edges thereof. The pressure-sensitive adhesive layer may have a single-layer structure or multilayer structure.

The pressure-sensitive adhesive layer may be present above the foam with the interposition of one or more other layers (underlayers). Exemplary underlayers include carrier layers (of which film layers and nonwoven fabric layers are preferred); other pressure-sensitive adhesive layers; intermediate layers; and under coats.

When the pressure-sensitive adhesive layer is present on or above only one side of the foam, one or more other layers may be present on the other side of the foam. Exemplary other layers herein include pressure-sensitive adhesive layers of other types; and carrier layers.

The electrically conductive foam member and the resin foam constituting the electrically conductive foam member may each have been subjected to processing so as to have a desired dimensions such as shape and thickness. Typically, the electrically conductive foam member may be sliced to give an electrically conductive foam member having a desired thickness. Independently, the electrically conductive foam member and the resin foam may have been processed into a variety of shape according typically to an apparatus or instrument to which the electrically conductive foam member is adopted.

The electrically conductive foam member is advantageously usable typically as sealants, electrically conductive members, shock absorbers, cushioning sealants, electrically conductive cushioning sealants, dustproofing members, and electrically conductive dustproofing members.

The electrically conductive foam member is advantageously usable particularly typically in an electronic appliance. This is because the resin foam constituting the electrically conductive foam member is highly flexible, employs carbon dioxide or another inert gas as a blowing agent for the production thereof, is thereby free from the generation of harmful substances or the remaining of contaminating substances, and is clean.

The electrically conductive foam member may be used typically in mounting or installing of a member or component (e.g., an optical member) to a predetermined position. In particular, the electrically conductive foam member is advantageously usable even in mounting of a compact member or component (e.g., a compact optical member) to a slimmed product.

Exemplary optical members to be mounted or installed through the electrically conductive foam member include image display members (of which small-sized image display members are preferred) to be mounted to image display devices such as liquid crystal display devices, electroluminescent display devices, and plasma display devices; and cameras and lenses (of which small-sized cameras and lenses are preferred) to be mounted to mobile communication devices such as so-called "cellular phones" and "mobile data terminals".

EXAMPLES

The present invention will be illustrated in further detail with reference to several working examples below.

(EXAMPLE 1)

In a twin-screw kneader supplied by The Japan Steel Works, LTD. at a temperature of 200°C were kneaded 50 parts by weight of a polypropylene [melt flow rate (MFR): 0.35 gram per 10 minutes], 50 parts by weight of a polyolefin elastomer [melt flow rate (MFR): 6 grams per 10 minutes, JIS-A hardness: 79°], 10 parts by weight of magnesium hydroxide, 10 parts by weight of a carbon product (trade name "Ketjenblack EC-600JD" supplied by Ketjen Black International Company, hollow shell structure, BET specific surface area: 1270 $m^2/g$), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 6.0 percent by weight relative to the total weight of the polymer. After being sufficiently saturated with the carbon dioxide gas, the resin composition was cooled to a temperature suitable for foaming (expansion), extruded through a die, and thereby yielded a foam.

(EXAMPLE 2)

In a twin-screw kneader supplied by The Japan Steel Works, LTD. at a temperature of 200°C were kneaded 50 parts by weight of a polypropylene [melt flow rate (MFR): 0.35 gram per 10 minutes], 50 parts by weight of a polyolefin elastomer [melt flow rate (MFR): 6 grams per 10 minutes, JIS-A hardness: 79°], 10 parts by weight of magnesium hydroxide, 10 parts by weight of a carbon product (trade name "Ketjenblack EC-600JD" supplied by Ketjen Black International Company, hollow shell structure, BET specific surface area: 1270 $m^2$/g), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 5.0 percent by weight relative to the total weight of the polymer. After being sufficiently saturated with the carbon dioxide gas, the resin composition was cooled to a temperature suitable for expansion, extruded through a die, and thereby yielded a foam.

(EXAMPLE 3)

In a twin-screw kneader supplied by The Japan Steel Works, LTD. at a temperature of 200°C were kneaded 70 parts by weight of a polypropylene [melt flow rate (MFR): 0.35 gram per 10 minutes], 30 parts by weight of a polyolefin elastomer [melt flow rate (MFR): 6 grams per 10 minutes, JIS-A hardness: 79°], 10 parts by weight of magnesium hydroxide, 10 parts by weight of a carbon product (trade name "Ketjenblack EC-600JD" supplied by Ketjen Black International Company, hollow shell structure, BET specific surface area: 1270 $m^2$/g), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 5.0 percent by weight relative to the total weight of the polymer. After being sufficiently saturated with the carbon dioxide gas, the resin composition was cooled to a temperature suitable for expansion, extruded through a die, and thereby yielded a foam.

(EXAMPLE 4)

In a twin-screw kneader supplied by The Japan Steel Works, LTD. at a temperature of 200°C were kneaded 70 parts by weight of a polypropylene [melt flow rate (MFR): 0.35 gram per 10 minutes], 30 parts by weight of a polyolefin elastomer [melt flow rate (MFR): 6 grams per 10 minutes, JIS-A hardness: 79°], 10 parts by weight of magnesium hydroxide, 10 parts by weight of a carbon product (trade name "Ketjenblack EC-600JD" supplied by Ketjen Black International Company, hollow shell structure, BET specific surface area: 1270 $m^2$/g), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 4.0 percent by weight relative to the total weight of the polymer. After being sufficiently saturated with the carbon dioxide gas, the resin composition was cooled to a temperature suitable for expansion, extruded through a die, and thereby yielded a foam.

(EXAMPLE 5)

In a twin-screw kneader supplied by The Japan Steel Works, LTD. at a temperature of 200°C were kneaded 50 parts by weight of a polypropylene [melt flow rate (MFR): 0.35 gram per 10 minutes], 50 parts by weight of a polyolefin elastomer [melt flow rate (MFR): 6 grams per 10 minutes, JIS-A hardness: 79°], 10 parts by weight of magnesium hydroxide, 10 parts by weight of a carbon product (trade name "Ketjenblack EC-600JD" supplied by Ketjen Black International Company, hollow shell structure, BET specific surface area: 1270 $m^2$/g), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 3.5 percent by weight relative to the total weight of the polymer. After being sufficiently saturated with the carbon dioxide gas, the resin composition was cooled to a temperature suitable for expansion, extruded through a die, and thereby yielded a foam.

(COMPARATIVE EXAMPLE 1)

In a twin-screw kneader supplied by The Japan Steel Works, LTD. at a temperature of 200°C were kneaded 50 parts by weight of a polypropylene [melt flow rate (MFR): 0.35 gram per 10 minutes], 50 parts by weight of a polyolefin elastomer [melt flow rate (MFR): 6 grams per 10 minutes, JIS-A hardness: 79°], 10 parts by weight of magnesium hydroxide, 10 parts by weight of a carbon product (trade name "Asahi #35" supplied by Asahi Carbon Co., Ltd., BET specific surface area: 23 m$^2$/g, solid structure), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 6.0 percent by weight relative to the total weight of the polymer. After being sufficiently saturated with the carbon dioxide gas, the resin composition was cooled to a temperature suitable for expansion, extruded through a die, and thereby yielded a foam.

(COMPARATIVE EXAMPLE 2)

In a twin-screw kneader supplied by The Japan Steel Works, LTD. at a temperature of 200°C were kneaded 50 parts by weight of a polypropylene [melt flow rate (MFR) : 0.35 gram per 10 minutes], 50 parts by weight of a polyolefin elastomer [melt flow rate (MFR): 6 grams per 10 minutes, JIS-A hardness: 79°], 10 parts by weight of magnesium hydroxide, 25 parts by weight of a carbon product (trade name "Ketjenblack EC-600JD" supplied by Ketjen Black International Company, hollow shell structure, BET specific surface area: 1270 m$^2$/g), and 1 part by weight of stearic acid monoglyceride. The kneadate (resin composition) was extruded into strands, cooled with water, and formed into pellets. The pellets were charged into a single-screw extruder supplied by The Japan Steel Works, LTD., and carbon dioxide gas was injected at an atmospheric temperature of 220°C and at a pressure of 13 MPa, where the pressure became 12 MPa after injection. The carbon dioxide gas was injected in an amount of 6.0 percent by weight relative to the total weight of the polymer. After being sufficiently saturated with the carbon dioxide gas, the resin composition was cooled to a temperature suitable for expansion, but failed to give a foam because of excessively low flowability of the resin composition.

(COMPARATIVE EXAMPLE 3)

A commercially available electrically conductive foam was used. This was composed of a resin mixture of a low-density polyethylene resin and an ethylene-vinyl acetate resin; and an antistatic agent.

(Evaluations)

The foams according to the examples and comparative examples were subjected to measurements or evaluations of volume resistivity, surface resistivity, repulsive load at 50% compression (50-percent compression load), apparent density, cell diameter, expansion ratio, clearance conformability, dustproofness index, and compression resistivity. The results are shown in Table 1.

(Volume Resistivity and Surface Resistivity)

The volume resistivity and surface resistivity were measured in accordance with the double-ring electrode method prescribed in JIS K 6271. The resistance data were measured using a device under the name "Digital Multimeter VOAC7520" (supplied by Iwatsu Test Instruments Corporation).

(Repulsive Load at 50% Compression (50-Percent Compression Load))

The repulsive load at 50% compression was measured in accordance with the method of measuring a compression hardness prescribed in JIS K 6767.

(Apparent Density)

A sample foam was punched with a punch die 40 mm long and 40 mm wide to give a punched specimen, and the size of the punched specimen was measured. Independently, the thickness of the specimen was measured with a 1/100 scaled dial gauge having a measuring terminal 20 mm in diameter ($\varphi$). The volume of the foam was calculated from these data. Next, the weight of the foam was measured with an even balance having a minimum scale of 0.01 g or more. The apparent density (g/cm$^3$) of the foam was calculated from these data.

(Average Cell Diameter)

The average cell diameter ($\mu$m) of a sample foam was determined by capturing an enlarged image of a cellular portion of the foam using a digital microscope (trade name "VH-8000" supplied by Keyence Corporation); and analyzing the captured image through an image analysis software (trade name "Win ROOF" supplied by Mitani Corporation).

(Expansion Ratio)

A density before expansion was measured, and the expansion ratio was determined according to the following expression:

$$\texttt{Expansion ratio (time) = (Density before}$$

$$\texttt{expansion)/(Density after expansion)}$$

In the expression, the density before expansion refers to the density of each pellet obtained in the examples and comparative examples; and the density after expansion refers to the apparent density of each foam obtained in the examples and comparative examples.

(Clearance Conformability)

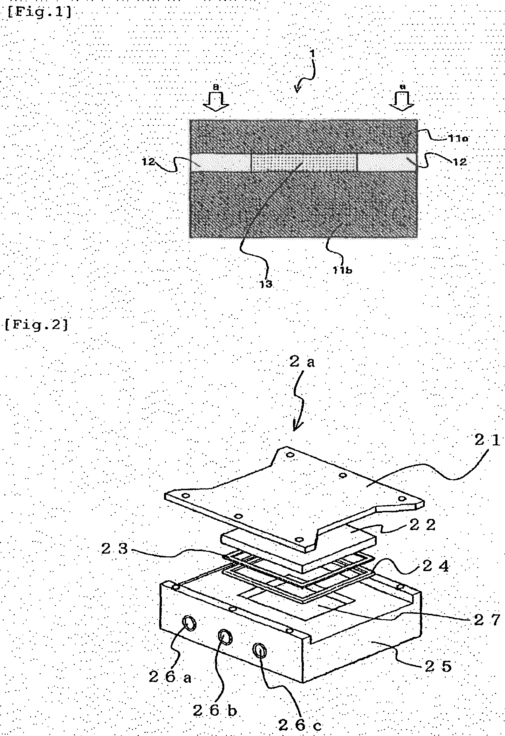

With reference to Fig. 1, each sample foam (foam 13) obtained in the examples and comparative example was mounted to a jig (clearance conformability testing jig 1), and how an upper acrylic board (10-mm-thick acrylic board 11a) deformed was visually observed. Specifically, a pair of 0.1-mm-thick spacers (0.1-mm-thick spacers 12) was arranged on lateral both sides of a 20-mm-thick acrylic board (20-mm-thick acrylic board 11b); the foam (foam 13) was placed in a center part between the spacers; the 10-mm-thick acrylic board (10-mm-thick acrylic board 11a) was placed on the top of the sample foam and spacers; a load (load "a") was applied to the upper acrylic board (10-mm-thick acrylic board 11a) in portions facing the spacers at both lateral ends to thereby compress the foam; and whether the upper acrylic board (10-mm-thick acrylic board 11a) deformed or not was visually observed. A sample causing no deformation was evaluated as having "good" clearance conformability, whereas a sample causing deformation was evaluated as having "poor" clearance conformability.
Each sample foam mounted to the jig had an initial thickness of 1 mm.

(Method for Measuring Dustproofness Index)

The measurement of the dustproofness index was performed using a dustproofness testing instrument illustrated in Figs. 2 and 3. In Figs. 2 and 3, the reference signs "2a" stands for the schematic structure of the dustproofness testing instrument; "2b" stands for the cross-sectional schematic structure of the dustproofness testing instrument; "21" stands for a ceiling panel; "22" stands for a spacer; "23" stands for a double-coated adhesive tape (frame-shaped double-coated pressure-sensitive adhesive tape, trade name "No. 5603", supplied by Nitto Denko Corporation, thickness: 30 $\mu$m); "24" stands for the foam (frame-shaped specimen obtained from each of the foams according to the examples and comparative examples through punching); "25" stands for a testing box; "26a" stands for a through hole connected via a pipe joint to a metering pump; "26b" stands for a through hole connected via a pipe joint to a particle counter; "26c" stands for a through hole connected via a pipe joint to a needle valve; "27" stands for an opening (square of a size of 52 mm in one side); and "28" stands for a space. The dustproofness testing instrument may have the space 28 inside thereof by screwing the substantially rectangular tabular ceiling panel 21 with the testing box 25. The resulting space 28 is in a substantially rectangular parallelepiped form and may be hermetically sealed. The opening 27 is an opening of the space 28. The ceiling panel 21 has cuts which constitute openings, whose plan views are rectangular (trapezoidal).
The spacer 22 is mounted below the bottom of the ceiling panel 21 facing the opening 27 so that the spacer 22 faces the entire surface of the opening 27. The spacer 22 is larger than the opening 27 and has a rectangular tabular form. The foam 24 is mounted via the double-coated adhesive tape 23 at a position of the bottom of the spacer 22 facing the opening 27. The foam 24 has a window having a size substantially the same as that of the opening 27. When the ceiling panel 21 is screwed, the foam 24 is therefore compressed in a thickness direction by the spacer 22 and the periphery of the opening 27. The compression ratio of the foam 24 is regulated by regulating the thickness of the spacer 22.
Accordingly, when the ceiling panel 21 and the testing box 25 are screwed with each other, the space 28 in the testing box 25 is hermetically sealed by the foam 24, double-coated adhesive tape 23, and spacer 22.
The foams according to the examples and comparative examples were punched into frame-shaped specimens. The frame-shaped specimens were square and had a thickness of 1 mm, a frame width of 1 mm, and a length of one outer side of 54 mm with a square opening having a length of one side of 52 mm. The frame-shaped specimens were subjected to testing in the dustproofness testing instrument, and the numbers of passed particles having diameters of 0.5 $\mu$m or more were counted.

Specifically, each of the frame-shaped specimens obtained from the foams according to the examples and comparative examples was set in the dustproofness testing instrument at a compression ratio of 50%. The dustproofness testing instrument housing the frame-shaped specimen was placed in a dust box, and the dust box was hermetically sealed.

Next, the count (number) of particles having diameters of 0.5 pm or more in the dust box was allowed to be substantially constant at around 1000000 by using a dust supply unit and a particle counter both connected to the dust box.

Next, aspiration by the metering pump from the through hole 26a was performed at an aspiration rate of 0.5 liter per minute for 30 minutes while keeping the needle valve of the through hole 26c closed. After the aspiration, the number of particles having diameters of 0.5 $\mu$m or more in the space 28 of the dustproofness testing instrument was counted with the particle counter to thereby determine a number of particles passing through the foam.

The number of particles herein was defined as a dustproofness index.

For higher dustproofness, a foam has a dustproofness index of preferably 50,000 or less, more preferably 30,000 or less, and furthermore preferably 10,000 or less.

(Compression Resistivity) (Volume resistivity of a resin foam 1 mm thick when being compressed by 5% in the thickness direction using a jig having bumps 0.1 mm high)

An electrode (25 mm long and 25 mm wide) connected to a data acquisition device (under the name "Omniace II RA1200", supplied by NEC Avio Infrared Technologies Co., Ltd.) was prepared, and a previously prepared PET tape (25 mm long, 7.5 mm wide, and 0.2 mm thick) was applied to both ends of the electrode to form bumps (bumpy portion) (see Fig. 4). The electrode bearing the PET tape was used as an upper electrode.

Fig. 4 depicts a schematic cross-sectional view of the upper electrode bearing the PET tape. In Fig. 4, the reference signs "41" stands for the electrode, and "42" stands for the PET tape.

Independently, another electrode (25 mm long and 25 mm wide) connected to the device was prepared as a lower electrode. The lower electrode had a flat surface.

Next, each of the foams according to the examples and comparative examples was processed to a predetermined size (a sheet 25 mm long, 25 mm wide, and 1 mm thick), and the processed foam was fixed via an electrically conductive acrylic double-coated pressure-sensitive adhesive tape to the lower electrode. After the fixation, the upper electrode was placed gently on the foam so that the bumped surface was in contact with the foam. The electrically conductive acrylic double-coated pressure-sensitive adhesive tape was a product under the trade name "electrically conductive copper foil double-coated adhesive tape No. 792", supplied by Teraoka Seisakusho Co., Ltd. including an acrylic electrically conductive pressure-sensitive adhesive as a pressure-sensitive adhesive, and having a tape thickness of 0.09 mm and an electric resistance of 0.02 $\Omega$/cm$^2$.

Next, the volume resistivity of the foam was measured while compressing the foam from above using an electromagnetic micromaterial testing machine (under the name "MMT-250", supplied by Shimadzu Corporation).

The volume resistivity of the foam when the foam was compressed by 5% in the thickness direction (compression ratio 5%) was defined as the compression resistivity.

The foams according to Examples 1 to 5 conformed to the bumpy portion and each showed a low volume resistivity even when being compressed at a low compression ratio of 5%. In contrast, the foam according to Comparative Example 3 could not conform to the bumpy portion, and whose volume resistivity could not be measured at a low compression ratio of 5%.

[Table 1]

TABLE 1

| | | Example 1 | Example 2 | Example 3 | Example 4 | Example 5 | Comparative Example 1 | Comparative Example 3 |
|---|---|---|---|---|---|---|---|---|
| | Volume resistivity [$\Omega \cdot$cm] | 2.3x 10$^4$ | 1.1x 10$^3$ | 7.6x 10$^5$ | 5.2x 10$^5$ | 2.0x 10$^3$ | 9.8x 10$^{15}$ | 1.1x 10$^4$ |
| | Surface resistivity ($\Omega$/square] | 7.6x 10$^4$ | 3.1x 10$^4$ | 2.0x 10$^6$ | 1.1x 10$^6$ | 6.0x 10$^5$ | 8.0x 10$^{15}$ | 3.6x 10$^4$ |
| | Repulsive load at 50% compression [N/cm$^2$] | 2.7 | 2.0 | 3.7 | 2.2 | 2.4 | 1.3 | 9.0 |

(continued)

| | Example 1 | Example 2 | Example 3 | Example 4 | Example 5 | Comparative Example 1 | Comparative Example 3 |
|---|---|---|---|---|---|---|---|
| Expansion ratio [time] | 17 | 20 | 17 | 24 | 19 | 23 | - |
| Apparent density [g/cm$^3$] | 0.058 | 0.050 | 0.058 | 0.042 | 0.054 | 0.042 | 0.046 |
| Average cell diameter [$\mu$m] | 65 | 157 | 119 | 232 | 312 | 42 | 301 |
| Clearance conformabllity | Good | Good | Good | Good | Good | Good | Poor |
| Dustproofness index [count] | 40 | 122 | 534 | 7206 | 294432 | 105 | 1306 |
| Compression resistivity [$\Omega\cdot$cm] | 1.4x $10^6$ | 3.9x $10^5$ | 9.6x $10^7$ | 7.8x $10^7$ | 4.6x $10^5$ | immeasurable | immeasurable |

According to Comparative Example 2, no foam could be obtained.

Industrial Applicability

The resin foam according to the present invention is flexible and electrically conductive, has been highly expanded, and is lightweight. In addition, the resin foam is conformable to a minute clearance. The resin foam is therefore advantageously usable typically as sealants, electrically conductive members, shock absorbers, cushioning sealants, electrically conductive cushioning sealants, dustproofing members, and electrically conductive dustproofing member.

Reference Signs List

1 clearance conformability testing jig
11a 10-mm-thick acrylic board
11b 20-mm-thick acrylic board
12 0.1-mm-thick spacer
13 foam
a load
2a schematic structure of dustproofness testing instrument
2b schematic cross-sectional structure of dustproofness testing instrument
21 ceiling panel
22 spacer
23 double-coated adhesive tape
24 foam
25 testing box
26a through hole
26b through hole
26c through hole
27 opening
28 space
41 electrode
42 PET tape

**Claims**

1. A resin foam having a volume resistivity of $10^{10}$ ohms centimeter ($\Omega \cdot cm$) or less, a repulsive load at 50% compression of 5 newtons per square centimeter ($N/cm^2$) or less, and a compression resistivity of $10^8$ ohms centimeter ($\Omega \cdot cm$) or less;

   wherein the resin foam has been formed from a resin composition comprising a resin, at least one electrically conductive substance, and a lubricant; and

   wherein the amount of the electrically conductive substance is from 3 to 20 parts by weight per 100 parts by weight of the resin, and the amount of the lubricant is 0.5 to 10 parts by weight per 100 parts by weight of the resin;

   the volume resistivity being measured in accordance with the double-ring electrode method prescribed in JIS K 6271;

   the repulsive load at 50% compression being measured according to the method for measuring a compression hardness prescribed in JIS K 6767; and

   the compression resistivity referring to a volume resistivity as measured by sandwiching a 25 mm long, 25 mm wide, and 1 mm thick sheet of the resin foam between a bumped upper electrode and a lower electrode so that the bumped surface of the upper electrode be in contact with the resin foam, and compressing the resin foam from above by 5% (at a compression ratio of 5%) in the thickness direction, wherein the bumped upper electrode is being obtained by applying two plies of a PET tape which is 25 mm long, 7.5 mm wide, and 0.1 mm thick to both ends of an electrode which is 25 mm long and 25 mm wide, and the resulting electrode has a depression 25 mm long, 10 mm wide, and 0.1 mm deep on a side to be in contact with the resin foam, and wherein the lower electrode has a smooth surface and is 25 mm long and 25 mm wide.

2. The resin foam according to claim 1, wherein the resin foam has a surface resistivity of $10^{10}$ ohms per square ($\Omega/\square$) or less.

3. The resin foam according to claim 1 or 2, wherein the resin foam has an expansion ratio of 9 times or more.

4. The resin foam according to any one of claims 1 to 3, wherein the resin foam has an apparent density of from 0.01 to 0.15 $g/cm^3$.

5. The resin foam according to any one of claims 1 to 4, wherein the resin foam has an average cell diameter of from 10 to 250 $\mu m$.

6. The resin foam according to claim 1, wherein the at least one electrically conductive substance is a carbonaceous filler.

7. The resin foam according to any one of claims 1 to 6, wherein the resin is a thermoplastic resin.

8. The resin foam according to any one of claims 1 to 78, comprising a thermoplastic resin and a carbonaceous filler, wherein the carbonaceous filler has a Brunauer-Emmett-Teller (BET) specific surface area of 500 $m^2/g$ or more, and wherein the resin foam has an average cell diameter of from 10 to 250 $\mu m$ and an apparent density of from 0.01 to 0.15 $g/cm^3$.

9. The resin foam according to any one of claims 1 to 8, wherein the resin foam has a closed cell structure or semiopen/semiclosed cell structure.

10. The resin foam according to any one of claims 1 to 9, wherein the resin foam has been formed through the steps of: impregnating a resin composition with an inert gas under high pressure of 6 MPa or more; and decompressing the impregnated resin composition.

11. The resin foam according to any one of claims 1 to 9, wherein the resin foam has been formed through the steps of: impregnating a resin composition with an inert gas under high pressure of 6 MPa or more, the resin composition comprising a thermoplastic resin and a carbonaceous filler, the carbonaceous filler having a BET specific surface area of 500 $m^2/g$ or more; and decompressing the impregnated resin composition.

12. The resin foam according to claim 10 or 11, wherein the inert gas is carbon dioxide.

13. The resin foam according to any one of claims 10 to 12, wherein the inert gas is in a supercritical state.

14. An electrically conductive foam member, comprising the resin foam according to any one of claims 1 to 13; and a pressure-sensitive adhesive layer present on or above one or both sides of the resin foam.

15. The electrically conductive foam member according to claim 14, further comprising the pressure-sensitive adhesive layer which included a film layer presents on the foam.

16. The electrically conductive foam member according to claim 14 or 15, wherein the pressure-sensitive adhesive layer comprises an acrylic pressure-sensitive adhesive.

17. The resin foam according to claim 1, wherein the resin is a mixture of a thermoplastic elastomer and a thermoplastic polymer other than a thermoplastic elastomer, the ratio of the thermoplastic elastomer to the thermoplastic polymer other than a thermoplastic elastomer, when used in combination as a mixture, is from 20:80 to 80:20, and the electrically conductive substance has a hollow structure.

18. The resin foam according to claim 1. wherein the lubricant is selected from the group consisting of liquid paraffins, paraffin waxes, microcrvstalline waxes, polyethylene waxes, stearic acid, behenic acid, 12-hvdroxystearic acid, butvl stearate, stearic acid monoglyceride, pentaerythritol tetrastearate, hydrogenated caster oil and stearvl stearate.

19. The resin foam according to claim 1, wherein the resin composition comprises a shrinkage inhibitor, and the amount of shrinkage inhibitor is 0.5 to 10 parts by weight per 100 parts by weight of the resin.

20. The resin foam according to claim 19, wherein the shrinkage inhibitor is selected from the group consisting of stearamide, oleamide, erucamide, methylene bis(stearamide) ethylene bis(stearamide) and lauric bisamide.

21. The resin foam according to claim 1, wherein the average cell diameter is 80 $\mu$m or less.

**Patentansprüche**

1. Harzschaum mit einem Volumenwiderstand von $10^{10}$ Ohm Zentimeter ($\Omega$•cm) oder weniger, einer abstoßenden Last bei 50% Kompression von 5 Newton je Quadratzentimeter (N/cm$^2$) oder weniger und einem Kompressionswiderstand von $10^8$ Ohm Zentimeter ($\Omega$•cm) oder weniger;
wobei der Harzschaum aus einer Harzzusammensetzung gebildet ist, umfassend ein Harz, wenigstens eine elektrisch leitfähige Substanz und ein Schmiermittel; und
wobei die Menge der elektrisch leitfähigen Substanz von 3 bis 20 Gewichtsteile je 100 Gewichtsteile des Harzes beträgt und die Menge des Schmiermittels 0,5 bis 10 Gewichtsteile je 100 Gewichtsteile des Harzes beträgt;
der Volumenwiderstand gemäß des in JIS K 6271 beschriebenen Doppelringselektrodenverfahrens gemessen ist;
die abstoßende Last bei 50 % Kompression gemäß des in JIS K 6767 beschriebenen Verfahrens zum Messen einer Kompressionshärte gemessen ist; und
der Kompressionswiderstand einen Volumenwiderstand betrifft, gemessen durch sandwichartiges Anordnen eines 25 mm langen, 25 mm breiten und 1 mm dicken Bogens eines Harzschaums zwischen einer unebenen oberen Elektrode und einer unteren Elektrode, so das sich die unebene Oberfläche der oberen Elektrode in Kontakt mit dem Harzschaum befindet, und Komprimieren des Harzschaums von oben um 5 % (mit einem Kompressionsverhältnis von 5 %) in der Dickenrichtung, wobei die unebene obere Elektrode erhalten wird indem zwei Lagen eines PET-Bandes, welches 45 mm lang, 7,5 mm breit und 0, 1 mm dick ist, an beide Enden einer Elektrode aufgebracht wird, welche 5 und 20 mm lang und 25 mm breit ist, und wobei die resultierende Elektrode eine Vertiefung mit 45 mm Länge, 10 mm Breite und 0, 1 mm Tiefe auf einer Seite aufweist, welche sich mit dem Harzschaum in Kontakt befindet, und wobei die untere Elektrode eine glatte Oberfläche aufweist und 25 mm lang und 5 und 20 mm breit ist.

2. Harzschaum nach Anspruch 1, wobei der Harzschaum einen Oberflächenwiderstand von $10^{10}$ Ohm pro Quadrat ($\Omega$●□) oder weniger aufweist.

3. Harzschaum nach Anspruch 1 oder 2, wobei der Harzschaum ein Expansionsverhältnis von 9-mal oder mehr aufweist.

4. Harzschaum nach einem der Ansprüche 1-3, wobei der Harzschaum eine scheinbare Dichte von 0,01-0,15 g/cm$^3$ aufweist.

5. Harzschaum nach einem der Ansprüche 1-4, wobei der Harzschaum einen mittleren Zelldurchmesser von 10-250

µm aufweist.

**6.** Harzschaum nach Anspruch 1, wobei die wenigstens eine elektrisch leitfähige Substanz ein kohlenstoffhaltiger Füllstoff ist.

**7.** Harzschaum nach einem der Ansprüche 1-6, wobei das Herz ein thermoplastisches Harz ist.

**8.** Harzschaum nach einem der Ansprüche 1-7, umfassend ein thermoplastisches Harz und einen kohlenstoffhaltigen Füllstoff, wobei der kunststoffhaltige Füllstoff eine spezifische Brunauer-Emmett-Teller (BET) Oberfläche von 500 m$^2$/g oder mehr aufweist und wobei der Harzschaum einen mittleren Zelldurchmesser von 10-250 µm und eine scheinbare Dichte von 0,01-0,15 g/cm$^3$ aufweist.

**9.** Harzschaum nach einem der Ansprüche 1-8, wobei der Harzschaum eine geschlossene Zellstruktur oder eine halboffene/halbgeschlossene Zellstruktur aufweist.

**10.** Harzschaum nach einem der Ansprüche 1-9, wobei der Harzschaum gebildet ist durch die Schritte: Tränken einer Harzzusammensetzung mit einem inerten Gas unter hohem Druck von 6 MPa oder mehr und Dekomprimieren der getränkten Harzzusammensetzung.

**11.** Harzschaum nach einem der Ansprüche 1-9, wobei der Harzschaum durch die Schritte gebildet ist: Tränken einer Harzzusammensetzung mit einem inerten Gas unter hohem Druck von 6 MPa oder mehr, wobei die Harzzusammensetzung ein thermoplastisches Harz und einen kohlenstoffhaltigen Füllstoff umfasst, der kohlenstoffhaltige Füllstoff eine spezifische BET-Oberfläche von 500 m$^2$/g oder mehr aufweist, und Dekomprimieren der getränkten Harzzusammensetzung.

**12.** Harzschaum nach Anspruch 10 oder 11, wobei das inerte Gas Kohlenstoffdioxid ist.

**13.** Harzschaum nach einem der Ansprüche 10-12, wobei sich inerte Gas in einem super kritischen Zustand befindet.

**14.** Elektrisch leitfähiges Schaumelement, umfassend den Harzschaum gemäß einem der Ansprüche 1-13; und eine druckempfindliche Klebeschicht, vorhanden auf oder oberhalb einer oder beiden Seiten des Harzschaum.

**15.** Elektrisch leitfähiges Schaumelement nach Anspruch 14, des weiteren umfassend die druckempfindliche Klebeschicht, welche eine Filmschicht umfasst, die auf dem Schaum vorhanden ist.

**16.** Elektrisch leitfähiges Schaumelement nach Anspruch 14 oder 15, wobei die druckempfindliche Klebeschicht einen druckempfindlichen Acrylklebstoff umfasst.

**17.** Harzschaum nach Anspruch 1, wobei das Harz eine Mischung aus einem thermoplastischen Elastomer und einem anderen thermoplastischen Polymer als ein thermoplastisches Elastomer ist, wobei das Verhältnis des thermoplastischen Elastomer zu dem anderen thermoplastischen Polymer als einem thermoplastischen Elastomer, wenn in Kombination als eine Mischung verwendet, 20:80 bis 80:20 beträgt, und die elektrisch leitfähige Substanz eine hohle Struktur aufweist.

**18.** Harzschaum nach Anspruch 1, wobei das Schmiermittel gewählt ist aus der Gruppe bestehend aus flüssigen Paraffinen, Paraffinwachsen, Mikrokristallinwachsen, Polyethylenwachsen, Stearinsäure, Behensäure, 12-Hydroxystearinsäure, Butylstearat, Stearinsäuremonoglycerid, Pentaerythrittetrastearat, gehärtetem Ricinusöl und Stearylstearat.

**19.** Harzschaum nach Anspruch 1, wobei die Harzzusammensetzung einen Schrumpfungshemmer umfasst, und die Menge des Schrumpfungslemmas 0,5-10 Gewichtsteile pro 100 Gewichtsteile des Harzes beträgt.

**20.** Harzschaum nach Anspruch 19, wobei der Schrumpfungshemmer gewählt ist aus der Gruppe bestehend aus Stearamid, Oleamid, Erucamid, Methylenbis(stearamid), Ethylenbis(stearamid) und Laurinbisamid.

**21.** Harzschaum nach Anspruch 1, wobei der mittlere Zelldurchmesser 80 µm oder weniger beträgt.

## Revendications

**1.** Mousse de résine présentant une résistivité volumique de $10^{10}$ ohms centimètre ($\Omega\bullet$cm) ou moins, une charge de répulsion à 50 % de compression de 5 newtons par centimètre carré (N/cm$^2$) ou moins, et une résistance en compression de $10^8$ ohms centimètre ($\Omega\bullet$cm) ou moins ;

la mousse de résine ayant été formée à partir d'une composition de résine comprenant une résine, au moins une substance électriquement conductrice, et un lubrifiant ; et

la quantité de la substance électriquement conductrice étant de 3 à 20 parties en poids pour 100 parties en poids de la résine, et la quantité de lubrifiant étant de 0,5 à 10 parties en poids pour 100 parties en poids de la résine ;

la résistivité volumique étant mesurée selon le procédé d'électrode en double anneau prescrit dans la norme JIS K 6271 ;

la charge de répulsion sous une compression à 50 % étant mesurée selon le procédé de mesure d'une dureté sous compression prescrit dans la norme JIS K 6767 ; et

la résistance en compression désignant une résistivité volumique telle que mesurée en prenant en sandwich une feuille de 25 mm de long, 25 mm de large, et 1 mm d'épaisseur de la mousse de résine entre une électrode supérieure bombée et une électrode inférieure de sorte que la surface bombée de l'électrode supérieure se trouve en contact avec la mousse de résine, et en comprimant la mousse de résine à plus de 5 % (sous un rapport de compression de 5 %) dans le sens de l'épaisseur, où l'électrode supérieure bombée est obtenue par l'application de deux épaisseurs d'une bande de PET qui est de 25 mm de long, 7,5 mm de large, et 0,1 mm d'épaisseur aux deux extrémités d'une électrode qui est de 25 mm de long et 25 mm de large, et l'électrode résultante présente une dépression de 25 mm de long, 10 mm de large, et 0,1 mm de profondeur sur un côté se trouvant en contact avec la mousse de résine, et l'électrode inférieure présentant une surface lisse et étant de 25 mm de long et 25 mm de large.

**2.** Mousse de résine selon la revendication 1, la mousse de résine présentant une résistivité en surface de $10^{10}$ ohms par square ($\Omega/\square$) ou moins.

**3.** Mousse de résine selon la revendication 1 ou 2, la mousse de résine présentant un rapport d'expansion de 9 fois ou plus.

**4.** Mousse de résine selon l'une quelconque des revendications 1 à 3, la mousse de résine ayant une densité apparente de 0,01 à 0,15 g/cm$^3$.

**5.** Mousse de résine selon l'une quelconque des revendications 1 à 4, la mousse de résine ayant un diamètre moyen d'alvéole de 10 à 250 $\mu$m.

**6.** Mousse de résine selon la revendication 1, la au moins une substance électriquement conductrice étant une charge carbonée.

**7.** Mousse de résine selon l'une quelconque des revendications 1 à 6, la résine étant une résine thermoplastique.

**8.** Mousse de résine selon l'une quelconque des revendications 1 à 7, comprenant une résine thermoplastique et une charge carbonée, la charge carbonée ayant une surface spécifique de Brunauer-Emmett-Teller (BET) de 500 m$^2$/g ou plus, et la mousse de résine ayant un diamètre moyen d'alvéole de 10 à 250 $\mu$m et une densité apparente de 0,01 à 0,15 g/cm$^3$.

**9.** Mousse de résine selon l'une quelconque des revendications 1 à 8, la mousse de résine ayant une structure d'alvéole fermée ou une structure d'alvéole semi-ouverte/semi-fermée.

**10.** Mousse de résine selon l'une quelconque des revendications 1 à 9, la mousse de résine ayant été formée à travers les étapes de : imprégnation d'une composition de résine avec un gaz inerte sous pression élevée de 6 MPa ou plus ; et décompression de la composition de résine imprégnée.

**11.** Mousse de résine selon l'une quelconque des revendications 1 à 9, la mousse de résine ayant été formée à travers les étapes de : imprégnation d'une composition de résine avec un gaz inerte sous pression élevée de 6 MPa ou plus, la composition de résine comprenant une résine thermoplastique et une charge carbonée, la charge carbonée ayant une surface spécifique BET de 500 m$^2$/g ou plus ; et de décompression de la composition de résine imprégnée.

**12.** Mousse de résine selon la revendication 10 ou 11, le gaz inerte étant du dioxyde de carbone.

**13.** Mousse de résine selon l'une quelconque des revendications 10 à 12, le gaz inerte se trouvant sous un état supercritique.

**14.** Élément en mousse électriquement conducteur, comprenant la mousse de résine selon l'une quelconque des revendications 1 à 13 ; et une couche adhésive sensible à la pression présente sur ou au-dessus d'un ou des deux côtés de la mousse de résine.

**15.** Élément en mousse électriquement conducteur selon la revendication 14, comprenant en outre la couche adhésive sensible à la pression qui inclut une couche formant film présente sur la mousse.

**16.** Élément en mousse électriquement conducteur selon la revendication 14 ou 15, la couche adhésive sensible à la pression comprenant un adhésif acrylique sensible à la pression.

**17.** Mousse de résine selon la revendication 1, la résine étant un mélange d'un élastomère thermoplastique et d'un polymère thermoplastique autre qu'un élastomère thermoplastique, le rapport de l'élastomère thermoplastique au polymère thermoplastique autre qu'un élastomère thermoplastique, lorsqu'utilisés en combinaison sous la forme d'un mélange, étant de 20:80 à 80:20, et la substance électriquement conductrice ayant une structure creuse.

**18.** Mousse de résine selon la revendication 1, dans laquelle le lubrifiant est sélectionné dans le groupe constitué des paraffines liquides, des cires de paraffine, des cires microcristallines, des cires de polyéthylène, de l'acide stéarique, de l'acide béhénique, de l'acide 12-hydroxystéarique, du stéarate de butyle, du monoglycéride d'acide stéarique, du tétrastéarate de pentaérythritol, de l'huile de ricin hydrogénée et du stéarate de stéaryle.

**19.** Mousse de résine selon la revendication 1, dans lequel la composition de résine comprend un inhibiteur de rétrécissement, et la quantité d'inhibiteur de rétrécissement étant de 0,5 à 10 parties en poids pour 100 parties en poids de la résine.

**20.** Mousse de résine selon la revendication 19, dans laquelle l'inhibiteur de rétrécissement est sélectionné dans le groupe constitué du stéaramide, de l'oléamide, de l'érucamide, du bis(stéaramide) de méthylène, du bis(stéaramide) d'éthylène et du bisamide laurique.

**21.** Mousse de résine selon la revendication 1, dans laquelle le diamètre moyen des alvéoles est de 80 $\mu$m ou moins.

[Fig.1]

[Fig.2]

[Fig.3]

[Fig.4]

## REFERENCES CITED IN THE DESCRIPTION

**Patent documents cited in the description**

- WO 2002036667 A
- JP S62241929 A
- JP H0426615 B
- JP H11346082 A
- JP 2006063249 A
- JP 2004083804 A
- US 2003213939 A1
- US 2002010223 A1
- US 2008213565 A1
- JP 2004175819 A